(19)

Europäisches
Patentamt
European
Patent Office
Office européen
des brevets

(11) **EP 4 105 175 A1**

(12) **EUROPEAN PATENT APPLICATION**

(43) Date of publication:
**21.12.2022 Bulletin 2022/51**

(21) Application number: **22178782.3**

(22) Date of filing: **13.06.2022**

(51) International Patent Classification (IPC):
**C01B 25/32** (2006.01)       **C01B 25/36** (2006.01)
**H01M 4/04** (2006.01)       **H01M 4/139** (2010.01)
**H01M 4/36** (2006.01)       **H01M 4/48** (2010.01)
**H01M 4/58** (2010.01)       **H01M 4/587** (2010.01)

(52) Cooperative Patent Classification (CPC):
**C01B 25/36; C01B 25/32; H01M 4/0471;**
**H01M 4/139; H01M 4/364; H01M 4/483;**
**H01M 4/5825; H01M 4/587;** H01M 10/0525;
H01M 2004/027

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **14.06.2021 KR 20210076635**

(71) Applicant: **SK On Co., Ltd.**
**Seoul 03188 (KR)**

(72) Inventors:
• **MOON, Joon Hyung**
  **34124 Daejeon (KR)**

• **PARK, Eun Jun**
  **34124 Daejeon (KR)**
• **CHUNG, Ju Ho**
  **34124 Daejeon (KR)**
• **PARK, Gwi Ok**
  **34124 Daejeon (KR)**
• **YOO, Seok Keun**
  **34124 Daejeon (KR)**

(74) Representative: **Stolmár & Partner**
**Patentanwälte PartG mbB**
**Blumenstraße 17**
**80331 München (DE)**

(54) **NEGATIVE ELECTRODE ACTIVE MATERIAL AND FABRICATION METHOD THEREOF**

(57)     Provided is a negative electrode active material for a lithium secondary battery including: a silicon oxide ($SiO_x$, $0<x\leq2$) composite including an alkali metal or alkaline earth metal-containing phosphate; and an aluminum-containing phosphate.

FIG. 1

EP 4 105 175 A1

**Description**

**CROSS-REFERENCE TO RELATED APPLICATIONS**

This application claims priority under 35 U.S.C. §119 to Korean Patent Application No. 10-2021-0076635, filed on June 14, 2021, in the Korean Intellectual Property Office, the disclosure of which is incorporated herein by reference in its entirety.

**TECHNICAL FIELD**

The present disclosure relates to a negative electrode active material for a secondary battery and a method of manufacturing the same.

**BACKGROUND**

As an issue of global warming, which is a problem in modern society, arises, a demand for environmentally friendly technologies is rapidly increasing in response thereto. In particular, as a technical demand for electric vehicles and energy storage systems (ESS) increases, a demand for a lithium secondary battery in the spotlight as an energy storage device is exploding. Therefore, studies to improve energy density of the lithium secondary battery are in progress.

However, conventional commercialized lithium secondary batteries commonly use a graphite active material such as natural graphite and artificial graphite, but they have a low energy density due to the low theoretical capacity of the graphite, and thus, studies to improve the energy density by developing a new negative electrode material are in progress.

As a solution thereto, a Si-based material having a high theoretical capacity (3580 mAh/g) is emerging as one solution. However, the Si-based material as such has a disadvantage of deteriorated battery life characteristics due to large volume expansion (~400%) in the course of repeated charge and discharge. Thus, as a method of solving the issue of large volume expansion of the Si material, a $SiO_x$ material which has a low volume expansion rate as compared with Si has been developed. Though $SiO_x$ material shows excellent life characteristics due to its low volume expansion rate, it is difficult to apply the $SiO_x$ material to a lithium secondary battery in practice due to the unique low initial coulombic efficiency (ICE) by initial formation of an irreversible phase.

**SUMMARY**

An embodiment of the present invention is directed to providing a negative electrode active material for both improving an initial efficiency and a capacity and improving life characteristics.

Another embodiment of the present invention is directed to providing a negative electrode active material for suppressing a side reaction with an electrolyte produced in raising a slurry pH and in a charge and discharge process and improving slurry stability and life characteristics, by removing a lithium compound remaining on a surface of prelithiated silicon oxide particles.

In one general aspect,
a negative electrode active material for a lithium secondary battery includes: a silicon oxide ($SiO_x$, $0<x\leq2$) composite including an alkali metal or alkaline earth metal-containing phosphate; and an aluminum-containing phosphate.

According to an embodiment, the composite may have a weight ratio (Al/P) of aluminum (Al) to phosphorus (P) of 0.8 or less.

According to an embodiment, the composite may have a weight ratio (Al/P) of aluminum (Al) to phosphorus (P) of 0.1 to 0.6.

According to an embodiment, the negative electrode active material for a lithium secondary battery may include an alkali metal or alkaline earth metal-containing phosphate represented by the following Chemical formula 1:

$$[\text{Chemical formula 1}] \qquad M_xP_yO_z$$

wherein $1\leq x\leq4$, $1\leq y\leq4$, and $0<z\leq7$, and M includes one or more selected from the group consisting of Li, Na, Mg, and K.

According to an embodiment, the aluminum-containing phosphate may include one or more selected from the group consisting of $AlPO_4$, $Al(PO_3)_3$, $Al(H_2PO_4)_3$, $Al_2P_6O_{18}$, and $Al_4(P_4O_{12})_3$.

According to an embodiment, the silicon oxide may further include at least one lithium silicate selected from $Li_2SiO_3$, $Li_2Si_2O_5$, and $Li_4SiO_4$ in at least a part of the silicon oxide.

According to an embodiment, 10 to 95 parts by weight of the lithium silicate may be included with respect to 100 parts by weight of the silicon oxide.

According to an embodiment, the composite may further include amorphous carbon.

According to an embodiment, the negative electrode active material for a lithium secondary battery may further include one or more graphite-based materials selected from the group consisting of natural graphite and artificial graphite.

In another general aspect,

a method of manufacturing a negative electrode active material for a lithium secondary battery includes: a pretreatment process a) of mixing a silicon compound with an alkali metal or alkaline earth metal precursor and performing a heat treatment to dope the silicon compound with the metal; and

a complexation process b) of mixing the silicon compound doped with the metal with a phosphate precursor and an aluminum salt precursor and performing a heat treatment to prepare a silicon oxide composite.

According to an embodiment, the alkali metal or alkaline earth metal precursor of the pretreatment process a) may be a hydride, a hydroxide, an oxide, a carbonate, a metal particle, or a combination thereof of one or more metals selected from the group consisting of Li, Na, Mg, and K.

According to an embodiment, the pretreatment process a) may be a heat treatment at 500°C to 1000°C for 1 to 12 hours under an inert atmosphere.

According to an embodiment, the complexation process b) may be performed by a mechanochemical treatment.

According to an embodiment, the complexation process b) may be a heat treatment at 200°C to 600°C for 1 to 12 hours under an inert atmosphere.

In still another general aspect, a lithium secondary battery includes a negative electrode including the negative electrode active material according to an embodiment; and a positive electrode.

Other features and aspects will be apparent from the following detailed description, the drawings, and the claims.

## BRIEF DESCRIPTION OF THE DRAWINGS

FIGS. 1 and 2 are drawings showing results of scanning electron microscope-energy dispersive X-ray spectrometer (SEM-EDX) analysis for a silicon oxide composite prepared according to Example 1 of the present invention.

FIG. 3 is a drawing showing results of X-ray diffraction (XRD) analysis for the silicon oxide composite prepared according to Example 1 of the present invention.

## DETAILED DESCRIPTION OF EMBODIMENTS

Advantages and features of the present invention and methods to achieve them will be elucidated from exemplary embodiments described below in detail with reference to the accompanying drawings. However, the present invention is not limited to exemplary embodiments disclosed below, but will be implemented in various forms. The exemplary embodiments of the present invention make disclosure of the present invention thorough and are provided so that those skilled in the art can easily understand the scope of the present invention. Therefore, the present invention will be defined by the scope of the appended claims. Detailed description for carrying out the present invention will be provided with reference to the accompanying drawings below. Regardless of the drawings, the same reference number indicates the same constitutional element, and "and/or" includes each of and all combinations of one or more of mentioned items.

Unless otherwise defined herein, all terms used in the specification (including technical and scientific terms) may have the meaning that is commonly understood by those skilled in the art. Throughout the present specification, unless explicitly described to the contrary, "comprising" any elements will be understood to imply further inclusion of other elements rather than the exclusion of any other elements. In addition, unless explicitly described to the contrary, a singular form includes a plural form herein.

In the present specification, it will be understood that when an element such as a layer, film, region, or substrate is referred to as being "on" or "above" another element, it can be directly on the other element or intervening elements may also be present.

In the present specification, an average particle size may refer to D50, and the D50 refers to a diameter of a particle with a cumulative volume of 50% when cumulated from the smallest particle in measurement of a particle size distribution by a laser scattering method. Here, for D50, the particle size distribution may be measured by collecting a sample according to a KS A ISO 13320-1 standard and using Mastersizer 3000 available from Malvern Panalytical Ltd. Specifically, a volume density may be measured after particles are dispersed in ethanol as a solvent, using an ultrasonic disperser, if necessary.

The present invention provides a negative electrode active material for a secondary battery including: a silicon oxide ($SiO_x$, $0<x\leq2$) composite including an alkali metal or alkaline earth metal-containing phosphate; and an aluminum-containing phosphate.

The composite may have a core-shell structure including: a core including the silicon oxide; and a shell including an alkali metal or alkaline earth metal-containing phosphate and an aluminum-containing phosphate, placed on the core.

The silicon oxide includes a metal compound, and as an example, the metal compound may be one or more selected from the group consisting of MOH and $MCO_3$. The metal M in the metal compound may be an alkali metal or an alkaline earth metal, and specifically, may be one or more selected from the group consisting of Li, Na, Mg, and K. The metal compound, which remains on a surface of a pretreated silicon compound and is a residual unreacted metal compound, remaining after the pretreatment, is a material essentially produced in a pretreatment process of the silicon compound.

When the metal compound is dissolved in a solvent in a process of preparing a negative electrode slurry including a negative electrode active material, it may increase the pH of the negative electrode slurry, and the increase in pH contracts the chain of a polymer binder which is an essential constituent of the slurry to cause a decrease in adhesive strength between a current collector and a negative electrode active material layer due to a decrease in the viscosity of the slurry.

In addition, the elution of the metal compound described above in a negative electrode slurry may oxidize a Si component of the silicon oxide which is an active material to produce gas, thereby causing deterioration of the stability and performance of the negative electrode slurry.

In the present invention, since a silicon oxide composite having a core-shell structure including a shell including an alkali metal or alkaline earth metal-containing phosphate; and an aluminum-containing phosphate, placed on the core is prepared, the metal compound may be effectively removed, thereby solving the above problems. Specifically, the content of the metal compound in the composite may be lowered to less than 5 wt%, specifically to 0.1 to 1.5 wt%, and thus, the metal compound may be substantially completely removed. In addition, the surface structure of the composite may be stabilized to improve battery capacity and life characteristics.

The silicon oxide may further include at least one lithium silicate selected from $Li_2SiO_3$, $Li_2Si_2O_5$, and $Li_4SiO_4$ in at least a part of the silicon oxide.

When forming a $Li_2SiO_3$ phase, a smaller amount of Si is consumed than in forming a phase of lithium silicate such as $Li_2Si_2O_5$, and thus, capacity characteristics may be improved and a severe volume change of Si during a battery cycle life is mitigated, which is advantageous for improvement of life characteristics. Meanwhile, since a $Li_4SiO_4$ phase has a high reactivity with moisture, it is difficult to adjust the physical properties of a slurry in manufacture of an electrode, and thus, the $Li_4SiO_4$ phase is not preferred.

The core may include 10 to 95 parts by weight, preferably 30 to 90 parts by weight, and more preferably 50 to 90 parts by weight of the lithium silicate, with respect to 100 parts by weight of the silicon oxide. Within the content range, formation of an initial irreversible phase of the silicon oxide produced during initial charge and discharge may be suppressed to increase initial efficiency and capacity.

Meanwhile, the silicon oxide may include 25 parts by weight or less, preferably 10 parts by weight or less, more preferably 5 parts by weight or less, and still more preferably less than 1 part by weight of $Li_4SiO_4$, with respect to 100 parts by weight of the silicon oxide. Since the $Li_4SiO_4$ phase has irreversible characteristics to a Li ion and is vulnerable to moisture, it is not preferred as an active material of a negative electrode using a aqueous binder. Within the range of the $Li_4SiO_4$ phase, water resistance of a negative electrode slurry may be improved.

The lithium silicate is formed by mixing the silicon oxide and a metal compound including lithium and performing a heat treatment, and a residual unreacted metal compound may remain on the surface of the silicon oxide. In the process of forming the lithium silicate in a high content range described above, the content of the residual metal compound is increased proportionally, and thus, problems such as the increased pH of the negative electrode slurry and gassing described above may be more serious.

The silicon oxide composite according to an exemplary embodiment of the present invention may efficiently remove the high content of the residual metal compound described above by converting the metal compound into an alkali metal or alkaline earth metal-containing phosphate. Accordingly, initial performance may be improved by the high content of lithium silicate, and also, the problems caused by the metal compound remaining in the process of forming the lithium silicate may be effectively suppressed.

The composite may include 80 to 99 parts by weight, preferably 90 to 99 parts by weight, and more preferably 95 to 99 parts by weight of the silicon oxide with respect to 100 parts by weight of the composite.

The silicon oxide in the composite may have an average particle size of 2 to 30 μm, preferably 5 to 10 μm.

The shell placed on the core may include an alkali metal or alkaline earth metal-containing phosphate; and an aluminum-containing phosphate. Here, the alkali metal or alkaline earth metal-containing phosphate may be a product converted from the metal compound.

Specifically, the metal compound may remain in fine cracks present inside the silicon oxide particles or on the surface of the particles. Therefore, when the alkali metal or alkaline earth metal-containing phosphate is converted from the metal compound, a gradient in which the concentration of the alkali metal or alkaline earth metal-containing phosphate is increased from the shell to the core may be formed. Specifically, the shell may have a concentration gradient in which the concentration of the alkali metal or alkaline earth metal-containing phosphate is increased in the thickness direction from the surface of the shell to the interface where the shell and the core are in contact with each other. Here, the concentration may be continuously increased or discontinuously (stepwise) increased in the thickness direction.

As an example, since the alkali metal or alkaline earth metal-containing phosphate is derived from the metal compound remaining silicon oxide particles, the shell may include an inner shell containing the alkali metal or alkaline earth metal-containing phosphate and an outer shell containing the aluminum-containing phosphate. Here, the shell may further include an intermediate shell in which the alkali metal or alkaline earth metal-containing phosphate and the aluminum-containing phosphate are mixed, and the intermediate shell may be placed between the inner shell and the outer shell.

By the shell having the concentration gradient, the elution of the metal compound in a slurry may be effectively suppressed, and furthermore, oxidation of a silicon component in the core may be suppressed. Meanwhile, when the metal compound is separately added from the outside to form the alkali metal or alkaline earth metal-containing phosphate, it is difficult to form the shell having the concentration gradient described above, and in contrast, a gradient in which the concentration of the alkali metal or alkaline earth metal-containing phosphate is increased toward the surface of the shell is formed, or alkali metal or alkaline earth metal-containing phosphate particles may be synthesized apart from the composite particles having a core-shell structure, and thus, the effect may not be expressed.

In terms of effectively suppressing the elution of the metal compound contained in the silicon oxide in the core to the outside under a water-based slurry environment, the shell may have an average thickness of 0.1 to 100 nm, preferably 1 to 10 nm, and more preferably 2 to 5nm.

Meanwhile, the alkali metal or alkaline earth metal-containing phosphate; and the aluminum-containing phosphate are not included only in the shell of the composite, and may also be included in the core.

The composite may include an alkali metal or alkaline earth metal-containing phosphate represented by the following Chemical formula 1':

$$[\text{Chemical formula 1'}] \qquad M_{x1}R_{x2}P_yO_z$$

wherein $1 \leq x1 \leq 4$, $0 \leq x2 \leq 3$, $1 \leq x1+x2 \leq 4$, $1 \leq y \leq 4$, and $0 < z \leq 7$, M is one or more selected from the group consisting of Li, Na, Mg, and K, and R is a monovalent substituent and is one or more selected from the group consisting of hydrogen, C1-C4 alkoxy, C1-C4 alkylcarbonyloxy, C6-C12 aryloxy, and C6-C12 arylcarbonyloxy.

Specifically, the alkali metal or alkaline earth metal-containing phosphate may be represented by Chemical formula 1:

$$[\text{Chemical formula 1}] \qquad M_xP_yO_z$$

wherein $1 \leq x \leq 4$, $1 \leq y \leq 4$, and $0 < z \leq 7$, and M is one or more selected from the group consisting of Li, Na, Mg, and K.

As a specific example, the alkali metal or alkaline earth metal-containing phosphate may include one or more selected from the group consisting of $Li_3PO_4$, $Li_4P_2O_7$, $LiH_2PO_4$, and $CH_3COOP(O)(OK)(OLi)$.

The aluminum-containing phosphate may include one or more selected from the group consisting of $AlPO_4$, $Al(PO_3)_3$, $Al(H_2PO_4)_3$, $Al_2P_6O_{18}$, and $Al_4(P_4O_{12})_3$.

The composite including a core and a shell may have weight ratio (Al/P) of aluminum (Al) to phosphorus (P) of 0.8 or less, specifically 0.1 to 0.6, 0.2 to 0.4, or 0.2 to 0.35. Within the range, the metal compound contained in the silicon oxide described above may be efficiently converted into an alkali metal or alkaline earth metal-containing phosphate to effectively remove the metal compound, and stabilize the surface structure of the composite. Here, the contents of the phosphorus (P) and aluminum (Al) elements in the composite may be measured by inductively coupled plasma spectrometer (ICP) analysis.

It is preferred that the content of the aluminum-containing phosphate in the composite is less than the content of the alkali metal or alkaline earth metal-containing phosphate, and specifically, the content of the aluminum-containing phosphate may be less than 2 wt%, specifically 0.1 to 1.8 wt%, and preferably 0.5 to 1 wt%. Within the range, the excellent bonding properties and coatability of the aluminum-containing phosphate may be efficiently expressed to form a uniform shell on the core surface.

Meanwhile, the aluminum-containing phosphate may be formed by a reaction of a phosphate precursor and an aluminum salt precursor, and in the case, it is preferred to add an excessive amount of the phosphate precursor. The phosphate precursor added in excess reacts with the metal compound contained in the silicon oxide described above to be converted into an alkali metal or alkaline earth metal-containing phosphate, thereby maximizing the surface structure stabilization effect of the composite. Here, the content of the alkali metal or alkaline earth metal-containing phosphate in the composite may be 0.1 to 7 wt%, preferably 0.5 to 5 wt%, and more preferably 1 to 3 wt%.

The composite may further include amorphous carbon. An example of the amorphous carbon may include soft carbon, hard carbon, a mesophase pitch carbide, calcined coke, and the like. The amorphous carbon may form an outermost coating layer in the composite.

The composite may include 3 to 25 parts by weight, preferably 4 to 15 parts by weight, and more preferably 5 to 10 parts by weight of the amorphous carbon with respect to 100 parts by weight of the composite. Within the range, the electrical conductivity of the composite particles may be improved, and the volume expansion of the negative electrode active material including the composite may be relieved.

10 to 100 parts by weight, preferably 15 to 100 parts by weight, and as an example, 100 parts by weight of the composite may be included with respect to 100 parts by weight of the negative electrode active material.

The negative electrode active material may further include one or more graphite-based materials selected from the group consisting of natural graphite and artificial graphite. Specifically, the graphite-based material is a material capable of reversibly intercalation/deintercalation a lithium ion, and may have an amorphous, plate-like, flake, spherical, or fibrous shape.

The present invention also provides a method of manufacturing a negative electrode active material for a lithium secondary battery including: a pretreatment process a) of mixing a silicon compound with an alkali metal or alkaline earth metal precursor and performing a heat treatment to dope the silicon compound with the metal; and a complexation process b) of mixing the silicon compound doped with the metal with a phosphate precursor and an aluminum salt precursor and performing a heat treatment to prepare a silicon oxide composite.

The step a) is a pretreatment step of a silicon compound, and may be divided into a first step of preparing a silicon compound; and a second step of doping the silicon compound with a metal to prepare a pretreated silicon oxide.

In the first step, Si powder and $SiO_2$ powder are mixed by appropriately adjusting a mixing ratio thereof so that mole ratios of Si and O of the silicon compound particles ($SiO_x$, $0<x\leq2$) prepared are formed, and then a heat treatment is performed at a temperature of 500 to 1600°C for 1 to 12 hours or 1 to 8 hours under an inert atmosphere and under reduced pressure, thereby preparing the pretreated silicon oxide. The silicon compound prepared may be pulverized to prepare silicon compound particles.

The second step is doping the prepared silicon compound particles with a metal, in which the silicon compound particles may be mixed with an alkali metal or alkaline earth metal precursor and heat-treated to prepare a negative electrode active material including at least one lithium silicate selected from $Li_2SiO_3$, $Li_2Si_2O_5$, and $Li_4SiO_4$ in at least a part of the silicon oxide.

Specifically, the mixing may be performed by mixing the silicon compound and the alkali metal or alkaline earth metal precursor so that a metal/Si mole ratio is 0.3 to 1.0, preferably 0.3 to 0.8, and more preferably 0.4 to 0.8.

The alkali metal or alkaline earth metal precursor may be a hydride, a hydroxide, an oxide, a carbonate, a metal particle, or a combination thereof of one or more metals selected from the group consisting of Li, Na, Mg, and K, and preferably, may be a lithium precursor including at least one selected from LiOH, Li, LiH, $Li_2O$, and $Li_2CO_3$.

Subsequently, the mixture may be heat-treated at 500°C to 1000°C, preferably 500 to 700°C for 1 to 12 hours under an inert atmosphere. When a metal doping process by an electrochemical method or a redox method is used, a metal silicate may be easily produced, but under the heat treatment conditions, the effect of reliving a volume increase of the silicon oxide may increase a production rate of a better metal silicate, for example, $Li_2SiO_3$, which is advantageous to life characteristic improvement.

The silicon oxide prepared by step a) may include a residual metal precursor including at least one or more selected from LiOH, Li, LiH, $Li_2O$, and $Li_2CO_3$.

The step b) is a complexation step of the silicon oxide doped with a metal, and may be divided into a first step of mixing the silicon oxide with a phosphate precursor and an aluminum salt precursor; and a second step of a heat treatment.

In the first step, the silicon oxide prepared in step a), a phosphate precursor, and an aluminum salt precursor may be mixed by a solid phase reaction without a use of a solvent. Specifically, the mixing may be performed by dry mixing with a shear stress and a centrifugal force applied, and preferably, may be performed by a mechanochemical treatment.

The mechanochemical process is a process for preparing composite particles by applying a compression and a shear force to two or more kinds of particles different from each other to closely adhere the particles, and Mechanofusion system powder compounding equipment available from Hosokawa Micron Ltd. may be used. It is preferred that a circumferential speed difference between a rotating drum and an inner member is 10 to 50 m/s, a distance therebetween is 1 to 100 mm, and a treatment time is 30 to 120 minutes.

The phosphate precursor is not largely limited as long as it is a material including a phosphoric acid moiety, and preferably, may include one or more selected from the group consisting of $NH_4H_2PO_4$, $(NH_4)_2HPO_4$, and $H_3PO_4$.

Though the aluminum salt precursor is not particularly limited, preferably, it may include one or more selected from the group consisting of $Al(NO_3)_3$, $NH_4Al(SO_4)_2$, $AlCl_3$, $AlF_3$, and $Al(OH)_3$.

In terms of preparing a silicon oxide composite having a composition ratio to be desired in the present invention, a weight ratio between the phosphate precursor and the aluminum salt precursor may be 1:0.5 to 1:2, preferably 1: 0.8 to 1:1.2.

The second step is a heat treatment step, in which the heat treatment may be performed at a temperature of 200 to 600°C for 1 to 12 hours or 1 to 8 hours under an inert atmosphere. Within the range, the residual metal precursor contained in the silicon oxide may be converted into the alkali metal or alkaline earth metal-containing phosphate, thereby obtaining the silicon oxide composite having a weight ratio (Al/P) of aluminum (Al) to phosphorus (P) to be desired in the present invention.

The present invention also provides a lithium secondary battery including a negative electrode including the negative electrode active material according to an embodiment of the present invention; and a positive electrode.

The negative electrode includes: a current collector; and a negative electrode active material layer including the negative electrode active material and a aqueous binder, disposed on the current collector.

The current collector may be selected from the group consisting of a copper foil, a nickel foil, a stainless steel foil, a titanium foil, a nickel foam, a copper foam, a polymer substrate coated with a conductive metal, and a combination thereof, but is not limited thereto.

The negative electrode active material layer includes the negative electrode active material and the aqueous binder, and optionally, may further include a conductive material.

The negative electrode active material may include a silicon oxide ($SiO_x$, $0<x\leq2$) composite including an alkali metal or alkaline earth metal-containing phosphate; and an aluminum-containing phosphate. Here, the silicon oxide may be $SiO_x$ wherein x is a real number satisfying $0<x\leq2$, specifically a real number satisfying $0.1\leq x\leq2$, and the core may further include a composite oxide of lithium and silicon with the silicon oxide. The composite oxide of lithium and silicon may include at least one lithium silicate selected from $Li_2SiO_3$, $Li_2Si_2O_5$, and $Li_4SiO_4$.

The negative electrode active material may further include a material capable of reversibly intercalation/deintercalation a lithium ion, a lithium metal, an alloy of lithium metal, a material capable of being doped and dedoped on lithium, or a transition metal oxide, together with the silicon oxide composite described above.

An example of the material capable of reversibly intercalation/deintercalation a lithium ion may include a carbon material, that is, a carbon-based negative electrode active material which is commonly used in the lithium secondary battery. A representative example of the carbon-based negative electrode active material may include crystalline carbon, amorphous carbon, or a combination thereof. An example of the crystalline carbon may include natural graphite or artificial graphite such as amorphous, plate-shaped, flake-shaped, spherical, or fibrous graphite (natural or artificial), and an example of the amorphous carbon includes soft carbon or hard carbon, a mesophase pitch carbonization material, calcined coke, and the like.

The alloy of the lithium metal may be an alloy of lithium with a metal selected from the group consisting of Na, K, Rb, Cs, Fr, Be, Mg, Ca, Sr, Si, Sb, Pb, In, Zn, Ba, Ra, Ge, Al, and Sn.

The material capable of doping or dedoping on the lithium may be a silicon-based material, for example, Si, $SiO_x$ ($0<x<2$), a Si-Q alloy (Q is an element selected from the group consisting of alkali metals, alkaline earth metals, Group 13 elements, Group 14 elements, Group 15 elements, Group 16 elements, transition metals, rare-earth elements, and combinations thereof, but is not Si), a Si-carbon composite, Sn, $SnO_2$, a Sn-R alloy (R is an element selected from the group consisting of alkali metals, alkaline earth metals, Group 13 elements, Group 14 elements, Group 15 elements, Group 16 elements, transition metals, rare-earth elements, and combinations thereof, but is not Sn), a Sn-carbon composite, and the like, and also, a mixture of at least one thereof and $SiO_2$ may be used. The elements Q and R may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may be a lithium titanium oxide.

The aqueous binder serves to adhere negative electrode active material particles to each other well and to attach the negative electrode active material to the current collector well. The aqueous binder may be polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylenepropylene-diene polymer (EPDM), sulfonated-EPDM, styrene-butadiene rubber (SBR), fluorine rubber, various copolymers thereof, and the like, and specifically, the binder may include a binder formed of carboxymethyl cellulose (CMC), styrene-butadiene rubber (SBR), and a mixture thereof.

The conductive material is used for imparting conductivity to an electrode, and any conductive material may be used as long as it is an electroconductive material which does not cause a chemical change in a battery to be configured. An example of the conductive material includes a carbon-based material such as natural graphite, artificial graphite, carbon black, acetylene black, ketjen black, and carbon fiber; a metal-based material such as metal powder or metal fiber of copper, nickel, aluminum, silver, and the like; a conductive polymer such as a polyphenylene derivative; or a mixture thereof.

Each of the contents of the binder and the conductive material in the negative electrode active material layer may be 1 to 10 wt%, preferably 1 to 5 wt% with respect to the total weight of the negative electrode active material layer, but is not limited thereto.

The positive electrode includes a current collector, and a positive electrode active material layer formed by applying a positive electrode slurry including a positive electrode active material on the current collector.

The current collector may be a negative electrode current collector described above, and any known material in the art may be used, but the present invention is not limited thereto.

The positive electrode active material layer includes a positive electrode active material, and optionally, may further include a binder and a conductive material. The positive electrode active material may be any known positive electrode active material in the art, and for example, it is preferred to use a composite oxide of lithium with a metal selected from cobalt, manganese, nickel, and a combination thereof, but the present invention is not limited thereto.

The binder and the conductive material may be the binder and the negative electrode conductive material described above, and any known material in the art may be used, but the present invention is not limited thereto.

The lithium secondary battery may further include a separator disposed between the negative electrode and the positive electrode; and an electrolyte solution.

The separator may be selected from glass fiber, polyester, polyethylene, polypropylene, polytetrafluoroethylene, or a combination thereof, and may be in the form of nonwoven or woven fabric. For example, in the lithium secondary battery, a polyolefin-based polymer separator such as polyethylene or polypropylene may be mainly used and a separator coated with a composition including a ceramic component or a polymer material may be used for securing thermal resistance or mechanical strength, and optionally, the separator may be used in a single layer or a multilayer structure, and any known separator in the art may be used, but the present invention is not limited thereto.

The electrolyte solution includes an organic solvent and a lithium salt.

The organic solvent serves as a medium in which ions involved in the electrochemical reaction of the battery may move, and for example, carbonate-based, ester-based, ether-based, ketone-based, alcohol-based, or aprotic solvents may be used, the organic solvent may be used alone or in combination of two or more, and when used in combination of two or more, a mixing ratio may be appropriately adjusted depending on battery performance to be desired. Meanwhile, any known organic solvent in the art may be used, but the present invention is not limited thereto.

The lithium salt is a material which is dissolved in the organic solvent, acts as a source of the lithium ion in the battery to allow basic operation of the lithium secondary battery, and promotes movement of lithium ions between a positive electrode and a negative electrode. An example of the lithium salt may include $LiPF_6$, $LiBF_4$, $LiSbF_6$, $LiAsF_6$, $LiN(SO_3C_2F_5)_2$, $LiN(CF_3SO_2)_2$, $LiC_4F_9SO_3$, $LiClO_4$, $LiAlO_2$, $LiAlCl_4$, $LiN(C_xF_{2x+1}SO_2)(C_yF_{2y+1}SO_2)$ (x and y are natural numbers), $LiCl$, $LiI$, $LiB(C_2O_4)_2$, or a combination thereof, but the present invention is not limited thereto.

A concentration of the lithium salt may be in a range of 0.1 M to 2.0 M. When the lithium salt concentration is within the range, the electrolyte solution has appropriate conductivity and viscosity, so that the electrolyte solution may exhibit excellent electrolyte solution performance and lithium ions may effectively move.

In addition, the electrolyte solution may further include pyridine, triethyl phosphate, triethanolamine, cyclic ether, ethylene diamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxyethanol, aluminum trichloride, and the like, if necessary, for improving charge/discharge characteristics, flame retardant characteristics, and the like. In some cases, a halogen-containing solvent such as carbon tetrachloride and ethylene trifluoride may be further included for imparting non-flammability, and fluoro-ethylene carbonate (FEC), propene sultone (PRS), fluoro-propylene carbonate (FPC), and the like may be further included for improving conservation properties at a high temperature.

The method of manufacturing a lithium secondary battery according to the present invention for achieving the above object may include laminating the negative electrode manufactured, a separator, and a positive electrode in this order to form an electrode assembly, placing the manufactured electrode assembly in a cylindrical battery case or an angled battery case, and then injecting an electrolyte solution. Otherwise, the lithium secondary battery may be manufactured by laminating the electrode assembly, immersing the assembly in the electrolyte solution, and placing the resultant product in a battery case and sealing the case.

As the battery case used in the present invention, those commonly used in the art may be adopted, there is no limitation in appearance depending on the battery use, and for example, a cylindrical shape, an angled shape, a pouch shape, a coin shape, or the like using a can may be used.

The lithium secondary battery according to the present invention may be used in a battery cell used as a power supply of a small device, and also may be preferably used as a unit cell in a medium or large battery module including a plurality of battery cells. A preferred example of the medium or large device may include an electric automobile, a hybrid electric automobile, a plugin hybrid electric automobile, a system for power storage, and the like, but is not limited thereto.

Hereinafter, the preferred examples and the comparative examples of the present invention will be described. However, the following examples are only a preferred exemplary embodiment of the present invention, and the present invention is not limited thereto.

**Examples**

(Example 1)

Step 1: Preparation of silicon compound

A raw material in which a silicon metal and silicon dioxide were mixed was introduced to a reaction furnace and evaporated at 600°C for 5 hours in the atmosphere having a vacuum degree of 10 Pa, and the resultant product (vaporized material) was deposited on a adsorption plate and sufficiently cooled and then a deposit was taken out and pulverized with a ball mill. The thus-obtained silicon compound particles were $SiO_x$, wherein x is 1.0. Next, a particle diameter of the silicon compound particles was adjusted by classifying to obtain SiO particles having an average particle diameter (D50) of 8 $\mu$m.

Step 2: Preparation of silicon oxide containing lithium compound

SiO particles and LiOH powder prepared above were mixed so that a mole ratio of Li/Si was 0.75 to form a mixed powder, and the mixed powder and a zirconia ball (1-20 times the mixed powder) were placed in an airtight container and mixed using a shaker for 30 minutes. Thereafter, the mixed powder was filtered using a sieve of 25 to 250 $\mu$m and then placed in an alumina crucible.

The alumina crucible was heat-treated at 800°C for 8 hours under a nitrogen gas atmosphere. Subsequently, the heat-treated powder was recovered and pulverized in a mortar to prepare a silicon oxide containing a lithium compound. At this time, the silicon oxide had an average particle size of 6.7 $\mu$m.

Step 3: Preparation of silicon oxide composite

98 wt% of the thus-prepared silicon oxide (D50: 6.7 $\mu$m), 1 wt% of $Al(NO_3)_3 \cdot 9H_2O$, and 1 wt% of $NH_4H_2PO_4$ were mixed and subjected to a mechanochemical treatment for 30 minutes, the temperature was raised to 400°C at a rate of 3°C/min under a high-purity argon atmosphere, and a heat treatment was performed at 400°C for 4 hours to prepare a silicon oxide composite.

Step 4: Manufacture of negative electrode

80 wt% of the thus-prepared composite, 10 wt% of Super C, 6 wt% of carboxymethyl cellulose, and 4 wt% of styrene butadiene rubber were mixed in distilled water to prepare a slurry. A negative electrode was manufactured by a common process of applying the slurry on a Cu foil current collector, and drying and rolling it.

Step 5: Manufacture of half battery

The negative electrode manufactured above and a lithium metal as a counter electrode were used, a polyethylene (PE) separator was interposed between the negative electrode and the counter electrode, and then an electrolyte solution was injected to manufacture a CR2016 coin cell. The assembled coin cell was paused at room temperature for 3 to 24 hours to manufacture a half battery. At this time, the electrolyte solution was obtained by mixing 1.0 M $LiPF_6$ as a lithium salt with an organic solvent (EC:EMC= 3:7 vol%) and mixing 2 vol% of FEC 2 as an electrolyte additive.

(Comparative Example 1)

The process was performed in the same manner as in Example 1, except that $Al(NO_3)_3 \cdot 9H_2O$ as an aluminum salt precursor and $NH_4H_2PO_4$ as a phosphate precursor were not added in step 3.

**Evaluation Example**

**Evaluation Example 1: Analysis of characteristics of silicon oxide composite**

(Example 1 and Comparative Example 1)

1) Scanning electron microscope-energy dispersive X-ray spectrometer (SEM-EDX) analysis

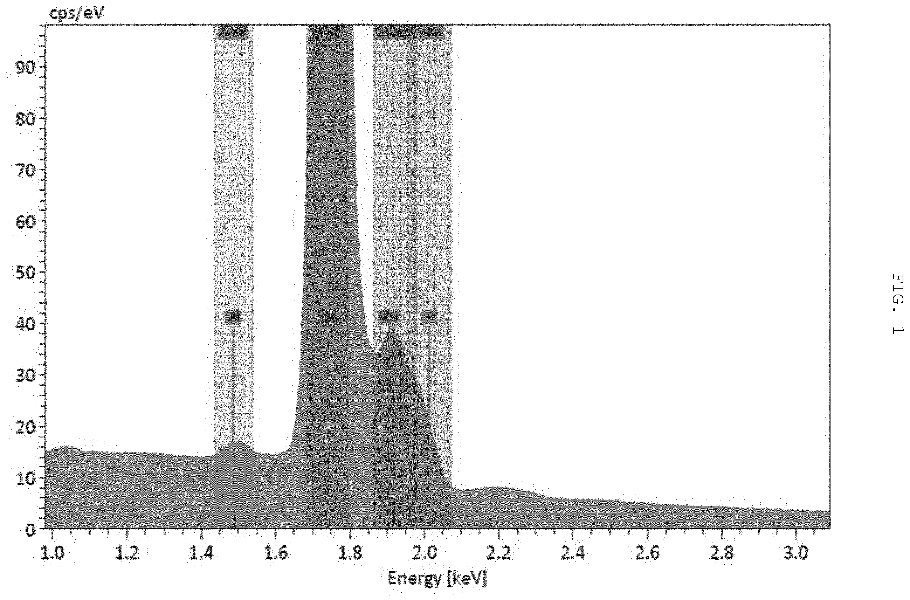

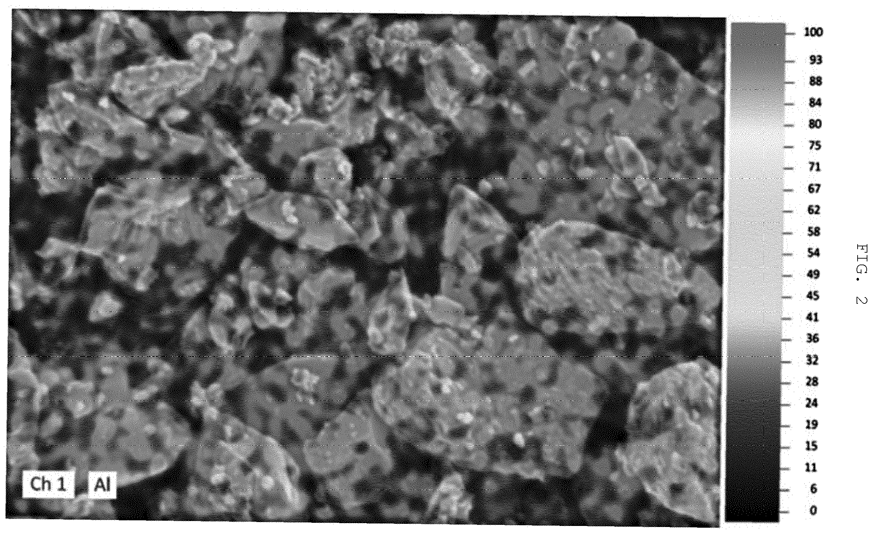

SEM-EDX analysis was performed for the silicon oxide composite prepared in step 3 of Example 1, and the results are shown in FIGS. 1 and 2.

It was confirmed from FIG. 1 that the composite prepared included aluminum and phosphorus in addition to silicon and oxygen.

It was confirmed from FIG. 2 that aluminum was evenly coated on the surface of the composite particles prepared.

2) X-Ray diffraction (XRD) analysis

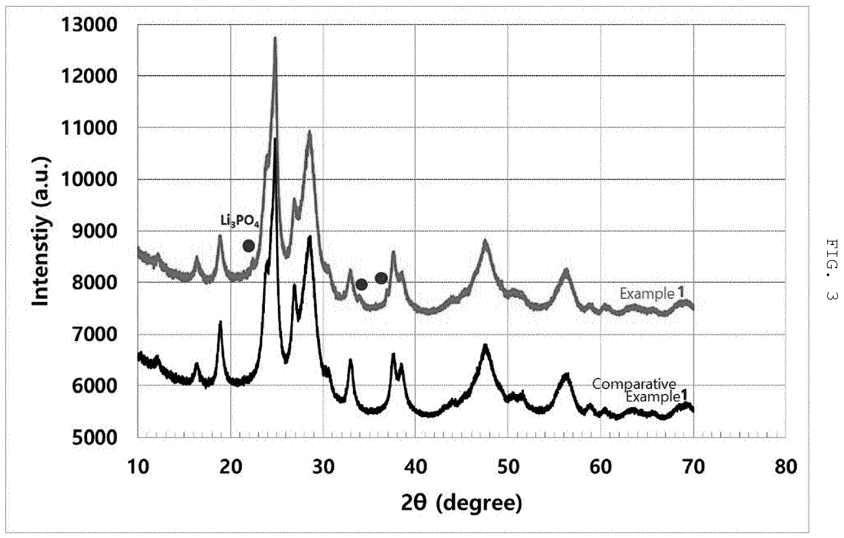

XRD analysis was performed for the silicon oxide composites prepared in step 3 of Example 1 and Comparative Example 1, and the results are shown in FIG. 3.

It was confirmed from FIG. 3 that a crystalline $Li_3PO_4$ phase was included in the composite prepared according to Example 1.

Evaluation Example 2: Evaluation of characteristics depending on introduction ratio of phosphate precursor and aluminum salt precursor

(Examples 2 and 8)

The process was performed in the same manner as in Example 1, except that $Al(NO_3)_3 \cdot 9H_2O$ as an aluminum salt precursor and $NH_4H_2PO_4$ as a phosphate precursor were introduced at a ratio shown in Table 1. At this time, a total content of the aluminum salt precursor and the phosphate precursor was 2 wt%.

(Comparative Example 2)

The process was performed in the same manner as in Example 1, except that the heat treatment was not performed in step 3.

(Evaluation method)

* Analysis of slurry gassing rate

A slurry including 25 wt% of the composite prepared in step 3, 70 wt% of artificial graphite, 1.5 wt% of carboxymethyl cellulose, 2 wt% of styrene butadiene rubber, and 1.5 wt% of conductive material Super C and having a solid content of 40 wt% was prepared.

4 ml of the thus-prepared slurry was injected to a gastight syringe, and was allowed to stand at room temperature for 7 days with the inlet being sealed.

Next, a slurry gassing rate was calculated by the following Calculation Formula 1, and the results are shown in Table 1.

```
     [Calculation Formula 1]

     Slurry gassing rate = (slurry volume after one day -

  initial slurry volume)/(initial slurry volume)
```

* Analysis of viscosity change ratio

The initial viscosity and the viscosity after one day of the slurry prepared in step 4 of Examples 1 to 8 and Comparative Examples 1 and 2 were measured and viscosity change over time was calculated by the following Calculation Formula 2, and the results are shown in Table 1. At this time, the viscosity of the slurry was measured at a shear rate of 1 $s^{-1}$ under room temperature and normal pressure conditions, using a Brookfield rotation viscometer.

```
     [Calculation Formula 2]

     viscosity   change   ratio   =   (initial   viscosity   -

  viscosity after one day)/initial viscosity
```

* Evaluation of charge and discharge performance

The half batteries manufactured according to Examples 1 to 8 and Comparative Examples 1 and 2 were charged with a constant current condition until the voltage reached 0.01 V (vs. Li) at a current of 0.1 C rate, at room temperature (25°C), and then were charged with a constant voltage condition by cut-off at a current of 0.01 C rate while maintaining 0.01 V in a constant voltage mode. The battery was discharged at a constant current of 0.1 C rate until the voltage reached 1.5 V (vs. Li). The charge and discharge were set as one cycle, one more cycle of charge and discharge was identically performed, and then 50 cycles in which the applied current was changed to 0.5 C during charge and discharge were performed, with a pause of 10 minutes between the cycles.

The charge and discharge efficiency and the discharge capacity of the first cycle of the 50 cycles were set as an initial efficiency and an initial discharge capacity, respectively, and a capacity retention rate of 50 cycles based on the initial discharge capacity was calculated and is shown in Table 1.

[Table 1]

| | Input ratio of aluminum salt precursor/phosphate precursor | Al/P value | Slurry gassing rate (%) | Viscosity change ratio (%) | Initial efficiency (%) | Initial discharge capacity (mAh/g) | Capacity retention rate (%) |
|---|---|---|---|---|---|---|---|
| Example 1 | 1 | 0.31 | 0% | ≤10% | 89.0 | 1350 | 97.5 |
| Example 2 | 0.82 | 0.25 | 0% | ≤10% | 88.4 | 1345 | 96.8 |
| Example 3 | 0.67 | 0.21 | 0% | ≤10% | 88.5 | 1351 | 96.4 |
| Example 4 | 0.54 | 0.16 | 0% | ≤10% | 88.7 | 1347 | 95.8 |
| Example 5 | 1.22 | 0.38 | 0% | ≤10% | 88.4 | 1352 | 95.7 |
| Example 6 | 1.50 | 0.45 | 0% | ≤10% | 88.5 | 1354 | 94.2 |
| Example 7 | 1.86 | 0.56 | 0% | ≤10% | 88.5 | 1348 | 94.0 |
| Example 8 | 2.33 | 0.75 | 75% | 21% | 87.1 | 1312 | 93.6 |
| Comparative Example 1 | - | - | ≥300% | 40% | 87.5 | 1313 | 86.6 |
| Comparative Example 2 | 1 | 0.33 | 205% | 38% | 84.2 | 1308 | 85.4 |

In Table 1, the Al/P value shows a weight ratio (Al/P) of aluminum (Al) to phosphorus (P) in the composite according to ICP analysis.

As seen in Table 1, it was confirmed that a silicon oxide composite having an Al/P value of 0.8 or less was prepared in a range of an introduction ratio of the aluminum salt precursor and the phosphate precursor of 0.5 to 3.

Specifically, in Examples 1 to 8 in which the Al/P value in the silicon oxide composite prepared was 0.8 or less, it was confirmed that the slurry gassing rate and the viscosity change over time were low as compared with Comparative Example 1 which did not include Al and P. It is considered that the residual lithium compound LiOH contained in the silicon oxide was efficiently removed by Reaction Formula 1, thereby suppressing gassing by elution of LiOH in the slurry and decreasing viscosity change over time.

Meanwhile, in Comparative Example 2, a silicon oxide composite was prepared under the conditions of the introduction rate of the aluminum salt precursor and the phosphate precursor identical to those of Example 1, but since no heat treatment was performed, the aluminum salt precursor and the phosphate precursor introduced according to Reaction Formula 2 reacted with each other to produce $AlPO_4$, or may be present in the composite in the state of precursor. Accordingly, it is considered that though the Al/P value was similar to that in Example 1, since no heat treatment was performed, the residual lithium compound LiOH contained in the silicon oxide was not removed and eluted into the slurry in a large amount to show a high slurry gassing rate and a high rate of viscosity over time.

[Reaction Formula 1]          $LiOH + (NH_4)H_2PO_4 \rightarrow Li_3PO_4$

[Reaction Formula 2]          $Al(NO_3)_3 \cdot 9H_2O + (NH_4)H_2PO_4 \rightarrow AlPO_4$

In addition, it was confirmed that the half batteries manufactured in Examples 1 to 8 had a high-capacity retention rate as compared with Comparative Examples 1 and 2. It is considered that a silicon oxide composite including a shell containing lithium, aluminum, and phosphorus on the surface of a core including a silicon oxide was produced by Reaction Formulae 1 and 2 to stabilize the surface structure of the composite, thereby significantly improving charge and discharge properties.

Meanwhile, in Examples 1 to 7 in which the Al/P value satisfied a range of 0.1 to 0.6, it was confirmed that improved slurry stability and initial charge and discharge properties were shown as compared with Example 8 being out of the range. Accordingly, it was confirmed that a preferred Al/P value in the silicon oxide composite was 0.1 to 0.6.

## Evaluation Example 3: Evaluation of characteristics depending on introduction amount of phosphate precursor and aluminum salt precursor

(Examples 9 and 15)

The process was performed in the same manner as in Example 1, except that $Al(NO_3)_3 \cdot 9H_2O$ as an aluminum salt precursor and $NH_4H_2PO_4$ as a phosphate precursor were added at a weight ratio of 1: 1 and in an introduction amount shown in Table 2 in step 3.

(Evaluation method)

Evaluation of the slurry gassing rate, the viscosity change ratio, and charge and discharge performance were performed in the same manner as in Evaluation Example 2, and the results are shown in Table 2.

[Table 2]

| | Total input amount of precursor * (wt%) | Al/P value | Slurry gassing rate (%) | Viscosity change ratio (%) | Initial efficie ncy (%) | Initial discharge capacity (mAh/g) | Capacity retentio n rate (%) |
|---|---|---|---|---|---|---|---|
| Example 1 | 2 | 0.31 | 0 | ≤10 | 89.0 | 1350 | 97.5 |
| Example 9 | 0.6 | 0.32 | 0 | ≤10 | 88.3 | 1360 | 95.7 |
| Example 10 | 1 | 0.34 | 0 | ≤10 | 88.4 | 1357 | 96.7 |
| Example 11 | 3 | 0.30 | 0 | ≤10 | 88.5 | 1348 | 96.8 |
| Example 12 | 4 | 0.31 | 0 | 30 | 88.1 | 1341 | 95.8 |
| Example 13 | 6 | 0.32 | 0 | 34 | 87.8 | 1330 | 95.2 |
| Example 14 | 0.2 | 0.31 | 200 | 32 | 85.4 | 1321 | 93.4 |
| Example 15 | 0.4 | 0.33 | 160 | 28 | 84.5 | 1322 | 94.3 |

The total input amount of the precursor refers to the total input amount of the aluminum salt precursor and the phosphate precursor.

As seen in Table 2, in Examples 9 to 13 in which the total introduction amount of the aluminum salt precursor and the phosphate precursor was 0.6 wt% or more, the slurry gassing rate was low and the charge and discharge characteristics were excellent as compared with Examples 14 and 15 in which the amount was less than 0.6 wt%. It is considered that since the reactions by Reaction Formulae 1 and 2 described above were efficiently performed in the content range, thereby effectively expressing the removal of the residual lithium compound LiOH and the stabilization of a composite surface structure.

In Examples 12 and 13, it is considered that the total introduction amount of the precursors was in excess, so that the Viscosity change ratio of the slurry was relatively high and the charge and discharge performance was decreased. Accordingly, it is confirmed that a preferred total introduction amount of the aluminum salt precursor and the phosphate precursor was 0.6 to 3 wt%.

The negative electrode active material for a lithium secondary battery according to the present invention may solve the problems of initial efficiency and capacity deterioration.

In addition, it may suppress expansion of silicon oxide particles due to a charge and discharge process, thereby improving battery stability and life characteristics.

In addition, a metal compound remaining on the surface of pretreated silicon oxide particles may be removed and the surface of active material particles may be stabilized, thereby improving slurry stability and battery life characteristics.

**Claims**

1. A negative electrode active material for a lithium secondary battery, comprising: a silicon oxide ($SiO_x$, $0<x\leq2$) composite including an alkali metal or alkaline earth metal-containing phosphate; and an aluminum-containing phosphate.

2. The negative electrode active material for a lithium secondary battery of claim 1, wherein the composite has a weight ratio (Al/P) of aluminum (Al) to phosphorus (P) of 0.8 or less.

3. The negative electrode active material for a lithium secondary battery of claim 2, wherein the composite has a weight ratio (Al/P) of aluminum (Al) to phosphorus (P) of 0.1 to 0.6.

4. The negative electrode active material for a lithium secondary battery of claim 1, wherein the alkali metal or alkaline earth metal-containing phosphate represented by the following Chemical formula 1 is included:

[Chemical formula 1]     $M_xP_yO_z$

wherein $1\leq x\leq4$, $1\leq y\leq4$, and $0<z\leq7$, and M includes one or more selected from the group consisting of Li, Na, Mg, and K.

5. The negative electrode active material for a lithium secondary battery of claim 1, wherein the aluminum-containing phosphate includes one or more selected from the group consisting of $AlPO_4$, $Al(PO_3)_3$, $Al(H_2PO_4)_3$, $Al_2P_6O_{18}$, and $Al_4(P_4O_{12})_3$.

6. The negative electrode active material for a lithium secondary battery of claim 1, wherein the silicon oxide further includes at least one lithium silicate selected from $Li_2SiO_3$, $Li_2Si_2O_5$, and $Li_4SiO_4$ in at least a part of the silicon oxide.

7. The negative electrode active material for a lithium secondary battery of claim 6, wherein 10 to 95 parts by weight of the lithium silicate is included with respect to 100 parts by weight of the silicon oxide.

8. The negative electrode active material for a lithium secondary battery of claim 1, wherein the composite further includes amorphous carbon.

9. The negative electrode active material for a lithium secondary battery of claim 1, further comprising: one or more graphite-based materials selected from the group consisting of natural graphite and artificial graphite.

10. A method of manufacturing a negative electrode active material for a lithium secondary battery, the method comprising:

a pretreatment process a) of mixing a silicon compound with an alkali metal or alkaline earth metal precursor and performing a heat treatment to dope the silicon compound with the metal; and
a complexation process b) of mixing the silicon compound doped with the metal with a phosphate precursor and an aluminum salt precursor and performing a heat treatment to prepare a silicon oxide composite.

11. The method of manufacturing a negative electrode active material for a lithium secondary battery of claim 10, wherein the alkali metal or alkaline earth metal precursor of the pretreatment process a) is a hydride, a hydroxide, an oxide, a carbonate, a metal particle, or a combination thereof of one or more metals selected from the group consisting of Li, Na, Mg, and K.

12. The method of manufacturing a negative electrode active material for a lithium secondary battery of claim 10, wherein the pretreatment process a) is a heat treatment at 500°C to 1000°C for 1 to 12 hours under an inert atmosphere.

13. The method of manufacturing a negative electrode active material for a lithium secondary battery of claim 10, wherein the complexation process b) is performed by a mechanochemical treatment.

14. The method of manufacturing a negative electrode active material for a lithium secondary battery of claim 10, wherein the complexation process b) is a heat treatment at 200°C to 600°C for 1 to 12 hours under an inert atmosphere.

15. A lithium secondary battery comprising: a negative electrode including the negative electrode active material of any one of claims 1 to 9; and a positive electrode.

FIG. 1

FIG. 2

FIG. 3

Europäisches
Patentamt

European
Patent Office

Office européen
des brevets

# EUROPEAN SEARCH REPORT

Application Number

EP 22 17 8782

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 518 819 A1 (SAMSUNG ELECTRONICS CO LTD [KR]; NAT UNIV CORP MIE UNIV [JP]) 31 October 2012 (2012-10-31) * paragraphs [0096], [0097]; claims 5,15; examples 1-3 * | 1-9,15 | INV. C01B25/32 C01B25/36 H01M4/04 H01M4/139 H01M4/36 |
| X | WO 2020/095558 A1 (SHINETSU CHEMICAL CO [JP]) 14 May 2020 (2020-05-14) * paragraphs [0142] – [0147]; example 1 * | 1,8-15 | H01M4/48 H01M4/58 H01M4/587 |

TECHNICAL FIELDS
SEARCHED     (IPC)

C01B
H01M

The present search report has been drawn up for all claims

| Place of search | Date of completion of the search | Examiner |
|---|---|---|
| The Hague | 10 November 2022 | Mattheis, Chris |

EPO FORM 1503 03.82 (P04C01)

## ANNEX TO THE EUROPEAN SEARCH REPORT
## ON EUROPEAN PATENT APPLICATION NO.

EP 22 17 8782

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2022

| Patent document cited in search report | | Publication date | Patent family member(s) | | Publication date |
|---|---|---|---|---|---|
| EP 2518819 | A1 | 31-10-2012 | CN | 102760860 A | 31-10-2012 |
| | | | EP | 2518819 A1 | 31-10-2012 |
| | | | KR | 20120122674 A | 07-11-2012 |
| | | | US | 2012276459 A1 | 01-11-2012 |
| WO 2020095558 | A1 | 14-05-2020 | CN | 112997339 A | 18-06-2021 |
| | | | EP | 3879608 A1 | 15-09-2021 |
| | | | JP | 7084849 B2 | 15-06-2022 |
| | | | JP | 2020077510 A | 21-05-2020 |
| | | | KR | 20210089653 A | 16-07-2021 |
| | | | TW | 202029558 A | 01-08-2020 |
| | | | US | 2021376311 A1 | 02-12-2021 |
| | | | WO | 2020095558 A1 | 14-05-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210076635